# EUROPÄISCHE PATENTSCHRIFT

(11) **EP 1 721 518 B1**
(45) Veröffentlichungstag und Bekanntmachung des Hinweises auf die Patenterteilung: **23.09.2009**
(21) Anmeldenummer: 06004359.3
(22) Anmeldetag: 03.03.2006
(51) Int. Cl.: A01F 29/16

(54) **Einzugsorgansteuerung für landwirtschaftliche Arbeitsmaschine**
Control of a feeding member of an agricultural working machine
Régulation d'un organe d'alimentation d'une machine de travail agricole

(30) Priorität: 13.05.2005 DE 102005023047
(43) Veröffentlichungstag der Anmeldung: 15.11.2006
(73) Patentinhaber: CLAAS Selbstfahrende Erntemaschinen GmbH, 33428 Harsewinkel (DE)
(72) Erfinder: Dückinghaus, Heinz, 33649 Bielefeld (DE); Strieker, Norbert, 33415 Verl (DE); Rhody, Thomas, 33165 Lichtenau (DE)

(56) Entgegenhaltungen:
- EP-A- 0 567 851
- DE-A1- 10 036 612
- US-A1- 2003 080 305
- US-A1- 2003 172 638
- US-B1- 6 388 860

## Beschreibung

Die Erfindung betrifft eine landwirtschaftliche Arbeitsmaschine mit mittels eines Hydraulikkreislaufes hydraulisch angetriebenen Einzugsorganen nach dem Oberbegriff des Anspruchs 1.

Ein derartiges System ist unter anderem aus der DE 100 36 612 A1 bekannt geworden. Dabei fördern die hydraulisch angetriebenen, als paarweise angeordnete Einzugswalzen ausgeführten Einzugsorgane zwischen sich einen Erntegutstrom, der in ihrem rückwärtigen Bereich an eine Emtegutzerkleinerungseinrichtung, wie etwa eine Häckseltrommel übergeben wird. Da der Emtegutstrom häufig von Fremdkörpern, wie Metallteilen oder Steinen durchsetzt ist, die an der mit hoher Geschwindigkeit umlaufenden Häckseltrommel schwere Beschädigungen hervorrufen können, ist den Einzugsorganen eine sogenannte Schnellstoppfunktion zugeordnet. Dabei werden mittels einer Detektionseinrichtung die im Gutstrom eingelagerten Fremdkörper ermittelt und in Abhängigkeit von ihrer Detektion wird in einer Steuereinrichtung ein Abschaltsignal für die Einzugsorgane generiert. Damit sicher vermieden wird, dass die erkannten Fremdkörper nach Abschalten der Einzugsorgane nicht durch deren Nachlaufverhalten dennoch in die Häckseltrommel gelangen, wird in der DE 100 36 612 A1 vorgeschlagen, dass dem hydraulischen Antrieb der Einzugsorgane eine Ventilkombination aus einem sogenannten Hauptsteuerventil in Kombination mit einem Vorsteuer-Wegeventil zugeordnet ist, wobei die Fremdkörper-Ortungsvorrichtung bei der Detektion von Fremdkörpern unmittelbar einen den Schnellstopp bewirkenden Schaltvorgang an dem Vorsteuer-Wegeventil auslöst. Neben der großen Anzahl von Bauteilen zur Realisierung der Schnellstoppfunktion haftet einer solchen Ausführung auch der Nachteil an, dass die verschiedenen Schaltvorgänge und die von dem Schaltmedium zurückzulegenden Entfernungen den Schnellstoppvorgang derart verzögern können, dass der sensierte Fremdkörper dennoch in die umlaufende Häckseltrommel gelangt und dort erhebliche Beschädigungen hervorruft.

Das Problem der geringen verfügbaren Reaktionszeit wird im Stand der Technik, wie etwa in der DE 100 21 663 A1 offenbart, dadurch verringert, dass die Anzahl der paarweise angeordneten Einzugsorgane erhöht wird, sodass sich der Weg des Erntegutes durch die Einzugsorgane und damit dessen Verwellzelt in den Einzugsorganen erhöht. Damit vergrößert sich das Zeitintervall zum Anhalten der Einzugsorgane, sodass mit größerer Sicherheit ein Eintreten der Fremdkörper in den Wirkbereich der umlaufenden Häckseltrommel vermieden wird. Eine solche Ausgestaltung hat jedoch den Nachteil, dass eine kostenintensive, den Bauraumbedarf erhöhende weitere Einzugswalzenstufe vorgesehen werden muss.

Es ist deshalb Aufgabe der Erfindung, die beschriebenen Nachteile des Standes der Technik zu vermeiden und insbesondere einen schnellen Stopp der Einzugsorgane im Falle der Aufnahme von Fremdkörpern mit niedrigem Bauteil- und Bauraumaufwand zu ermöglichen.

Diese Aufgabe wird erfingdungsgemäß durch die kennzeichnenden Merkmale des Anspruchs 1 gelöst.

Indem die erfindungsgemäße Schaltventllanordnung weder Schlauchleitungen noch federkraftbasierte Ventilsteuerungen aufweist und wobei die Schaltventilanordnung als Stetigventil ausgebildet ist, dessen Ventilkolben durch Ansteuerung von zumindest zwei Steuerzylindern in seiner Bewegung steuerbar ist. ist, wird sichergestellt, dass bei Detektion von Fremdkörpern Im Erntegutstrang ein abruptes Anhalten der Einzugs- und Vorpresswalzen möglich wird, da elastizitätsbadingte Trägheiten nicht überwunden werden müssen.

Eine kompakte, wenig Bauteile umfassende Ausgestaltung des erfindungsgemäßen Hydraulikkreislaufs ergibt sich dann, wenn die Schaltventilanordnung In einem Betriebszustand "Normalbetrieb" und wenigstens einem Betriebszustand "Schnellstopp" betreibbar ist.

In einer einfachen konstruktiven Ausgestaltung ermöglicht die Schaltventilanordnung in dem Betriebszustand "Normalbetrieb" eine Druckbeaufschlagung des Motors und das Spülen des Hydraulikmediums.

Eine besonders vorteilhafte Ausgestaltung der Erfindung ergibt sich dann, wenn die Schaltventilanordnung in dem Betriebszustand "Schnellstopp" einen Arbeitszyklus durchläuft, in dem in einem ersten Schritt die Förderung des Hydraulikmediums zum Hydromotor zumindest teilweise unterbrochen wird, in einem weiteren Schritt das Spülen des Hydraulikmediums eingestellt wird und in wenigstens einem dritten Schritt das Abbremsen des Hydromotors erfolgt. Auf diese Weise ermöglicht eine einzige Ventilanordnung die Abarbeitung des gesamten Betriebszustandes "Schnellstopp".

Um eine hohe Flexibilität in der Steuerbarkeit der Schnellstoppfunktion zu erhalten ist es von Vorteil, wenn in einer Ausgestaltung der Erfindung die Steuerzylinder unabhängig voneinander ansteuerbar sind.

In einer vorteilhaften Weiterbildung der Erfindung umfasst der die Schritte des Arbeitszyklus im Betriebszustand "Schnellstopp" realisierende Ventilkolben eine Kolbenfläche, die von den Zylinderflächen der wenigstens zwei Steuerzylinder an gegenüberliegenden Seiten kontaktiert wird. Auf diese Weise kann der Ventilkolben zuverlässig und auf konstruktiv einfache Weise von den Steuerzylindern geführt werden.

Eine effiziente und schnell arbeitende Umsteuerung zwischen den Betriebzuständen ergibt sich dann, wenn der eine Steuerzylinder als Schließzylinder ausgeführt ist und permanent durch einen Steuerdruck druckbeaufschlagt wird und der weitere Steuerzylinder als Öffnungszylinder ausgeführt ist und der Steuerdruck mit dem der weitere Steuerzylinder druckbeaufschlagbar ist zu- oder abgeschaltet werden kann.

In vorteilhafter Weiterbildung der Erfindung wird durch die Abschaltung des Steuerdrucks des weiteren Steuerzylinders das Umschalten der Schaltventilanordnung von dem Betriebszustand "Normalbetrieb" in den Betriebszustand "Schnellstopp" bewirkt.

Damit nach Abschaltung des Hauptantriebes die Nachlaufzeit von umlaufenden Arbeitsorganen, wie etwa der Häckseltrommel reduzierte werden kann ist dem Hydraulikkreislauf in einer vorteilhaften Ausgestaltung der Erfindung ein Bremsventil in der Weise zugeordnet ist, dass die Drehbewegung der Hydropumpe und der mit ihr in Wirkverbindung stehenden Arbeitsorgane abgebremst wird.

Wegen der erforderlichen extrem niedrigen Reaktionszeiten zwischen dem Erkennen eines Fremdkörpers und dem Auslösen der Schnellstoppfunktion ist in an sich bekannter Weise der Fremdkörper-Ortungsvorrichtung eine Auswert- und Steuereinheit zugeordnet, die in Abhängigkeit von einem Ortungssignal X der Fremdkörper-Ortungsvorrichtung ein Schnellstoppsignal Y zur Umschaltung der Schaltventilanordnung in den Betriebszustand "Schnellstopp" generiert

Damit ein sicheres Arbeiten des erfindungsgemäßen Hydraulikkreislaufs in dem Betriebszustand "Normalbetrieb" und ein extrem schnelles Abbremsen des Antriebs während des Bremsvorganges im Betriebszustand "Schnellstopp" gewährleistet werden, verharren in vorteilhafter Ausgestaltung der Erfindung die wenigstens zwei Steuerzylinder der Schaltventilanordnung im Betriebszustand "Normalbetrieb" und zumindest teilweise während der Abarbeitung des dritten Schritts des Arbeitszyklus der Schaltventilanordnung in dem Betriebszustand "Schnellstopp" im Gleichgewicht.

Auf konstruktiv einfache Weise kann der Gleichgewichtszustand zwischen den Steuerzylindem im Betriebszustand "Normalbetrieb" dadurch erreicht werden, dass die Zylinderflächenverhältnisse der Steuerzylinder aufeinander abgestimmt sind und/oder die Druckbeaufschlagung der Steuerzylinder mit gesteuerten Drücken des Hydraulikmediums erfolgt.

Ein sicheres Halten des Gleichgewichtszustandes im Betriebszustand "Schnellstopp" wird in vorteilhafter Ausgestaltung der Erfindung dann erreicht, wenn im wesentlichen am Ende des dritten Schrittes des Arbeitszyklus, die resultierende Druckkraft des druckbeaufschlagten Steuerzylinders im Gleichgewicht mit der von der Differenzfläche des Ventilkolbens und einem auf den Ventilkolben wirkenden Staudruck abhängigen Reaktionskraft steht.

Auf konstruktiv einfache Weise wird der erste Schritt des Arbeitszyklus des erfindungsgemäßen Stetigventils dadurch realisiert, dass dem Schließzylinder ein Bypasskolben zugeordnet ist dessen zumindest eine Bypassbohrung während der Bewegung des Ventilkolbens im ersten Schritt des Arbeitszyklusses eine Bypassleitung öffnet über die zumindest ein Teil des zum Hydromotor fließenden Hydraulikmediums abgeleitet wird.

Damit das in dem erfindungsgemäßen Hydraulikkreislauf verfügbare Hydraulikmedium nahezu vollständig zur Realisierung eines abrupten Abbremsens im Betriebszustand "Schnellstopp" herangezogen werden kann, der Hydraulikkreislauf also stets über den erforderlichen Speisedruck verfügt, kann in vorteilhafter Ausgestaltung der Erfindung der Bypassleitung ein Rückschlagventil in der Weise zugeordnet sein, dass die Druckquelle den Hydraulikkreislauf während des Schnellstoppvorganges mit Hydraulikmedium versorgen kann, während im Normalbetrieb das Rückschlagventil geschlossen ist.

In vorteilhafter Ausgestaltung der Erfindung weist der Ventilkolben eine Blende auf, die während der Bewegung des Ventilkolbens im zweiten Schritt des Arbeitszyklusses die Verbindung zwischen dem Arbeitsanschluss und einem Spülölkanal unterbricht. Dies hat insbesondere den Vorteil, dass vor dem Abbremsen des Antriebs sichergestellt wird, dass das gesamte im Hydraulikkreislauf verfügbare Hydraulikmedium zur Realisierung der Bremsfunktion verfügbar ist.

Damit das gesamte im Hydraulikkreislauf verfügbare Hydraulikmedium schlagartig zur Realisierung der Bremsfunktion verfügbar ist, weist der Ventilkolben einenends Drosselschlitze auf, die während der Bewegung des Ventilkolbens im dritten Schritt des Arbeitszyklusses die Rücklaufleitung vom Hydromotor zur Hydropumpe schließen, wobei das von der Hydropumpe nachgeförderte Hydraulikmedium einen Staudruck zum Abbremsen des Hydromotors aufbaut, der vorzugsweise im Bereich des zulässigen Betriebsdruckes liegt.

Damit Druckspitzen und extreme Beschleunigungen in dem erfindungsgemäßen Hydraulikkreislauf weitgehend vermieden werden und somit der belastungsabhängige Verschleiß niedrig gehalten wird, sind in vorteilhafter Weiterbildung der Erfindung dem Ventilkolben eine Vielzahl von Drosselstellen in der Weise zugeordnet sind, dass sich in Abhängigkeit von dem von dem Ventilkolben zurückgelegten Kolbenweg der freie Durchgangsquerschnitt für das Hydraulikmedium stetig ändert.

Damit die Steuerzylinder in ihren Endbereichen nicht ungebremst mit hoher Geschwindigkeit auf die jeweiligen Anschläge auftreffen sind in einer weiteren vorteilhaften Ausgestaltung der Erfindung den zumindest zwei Steuerzylindern Steuerkanten und/oder Drosselstellen in der Weise zugeordnet sind, dass die Bewegung des Ventilkolbens in den Endbereichen abgebremst wird.

Damit der erfindungsgemäße Antrieb eine kompakte, bauraumsparende Form aufweist und zugleich frei von Elastizitäten, wie etwa langen Schlauchleitungen sein kann, sind in vorteilhafter Weiterbildung der Erfindung der Hydromotor, die Hydropumpe, die Schaltventilanordnung und die zur Ansteuerung des Hydromotors, der Hydropumpe und der Schalfirentilanordnung in den Betriebzuständen "Normalbetrieb" und "Schnellstopp" notwenigen Schaltventile in einem den Antrieb der Einzugsorgane bildenden Antriebsblock zusammengefasst sind.

Eine hohe Flexibilität in der Gestaltung des Antriebes im Normal-, Schnellstopp- und Reversierbetrieb für die Einzugs- und Vorpresswalzen sowie das den Einzugs- und Vorpresswalzen vorgeschaltete Querförderorgan des Vorsatzgerätes wird dann erreicht, wenn die Einzugsorgane mit zumindest einem mechanischen Verteilgetriebe gekoppelt sind, dessen Eingangswelle mit dem hydraulischen Antrieb (13) gekoppelt ist und wobei das mechanische Verteilgetriebe zudem über einen weiteren Getriebeausgang verfügt und der weitere Getriebeausgang mit dem Querförderorgan des Vorsatzgerätes gekoppelt ist.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: eine landwirtschaftliche Arbeitsmaschine mit erfindungsgemäßem Antrieb in deiner schematischen Seitenansicht
- Figur 2: eine Detaildarstellung des erfindungsgemäßen Antriebs nach Figur 1
- Figur 3: eine schematische Darstellung des den erfindungsgemäßen Antrieb bildenden Hydraulikkreislaufs
- Figur 4: eine Detailschnittdarstellung der erfindungsgemäßen Ventilanordnung

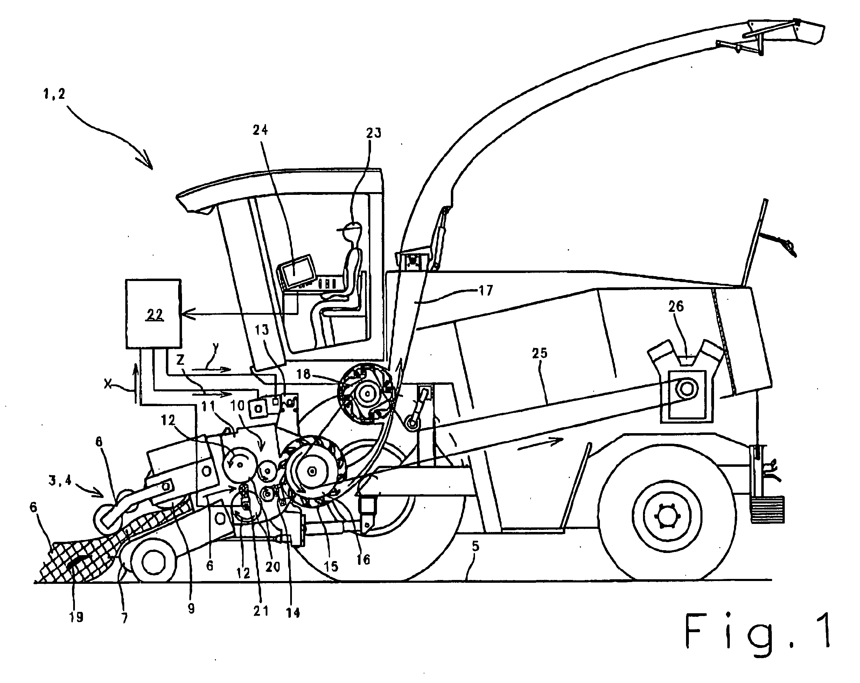

Figur 1 zeigt eine als selbstfahrender Feldhäcksler 2 ausgeführte landwirtschaftliche Arbeitsmaschine 1, der in ihrem frontseitigen Bereich ein als sogenannte Pick-up 4 ausgeführtes Vorsatzgerät 3 zugeordnet ist. Das Vorsatzgerät 3 nimmt im dargestellten Ausführungsbeispiel einen auf dem Boden 5 liegenden Erntegutstrang 6 mittels einer Aufsammeleinrichtung 7 auf, verdichtet diesen mittels einer Niederhalteranordnung 8 und führt den Erntegutstrang 6 schließlich über ein Querförderorgan 9 dem Vorsatzgerät 3 nachgeordneten Einzugs- und Vvrpresswalzen 10 zu. Die Einzugs- und Vorpresswalzen 10 werden paarweise von einem Einzugsgehäuse 11 aufgenommen. In an sich bekannter Weise werden die paarweise angeordneten Einzugs- und Vorpresswalzen 10 aktiv gemäß der Pfeilrichtung 12 mittels eines noch näher zu beschreibenden Antriebs 13 angetrieben. Dabei tritt der verdichtete Erntegutstrang 6 im rückwärtigen Bereich des Einzugsgehäuses 11 oberhalb einer Gegenschneide 14 in den Wirkbereich der Häckselmesser 15 einer aktiv angetriebenen, umlaufenden Häckseltrommel 16 ein. Der zerkleinerte Erntegutstrang 6 tritt schließlich mit hoher Geschwindigkeit im rückwärtigen Bereich der Häckseltrommel aus dieser in einen aufsteigenden Auswurfschacht 17 ein, in dem der Erntegutstrang 6 unter Umständen mittels eines sogenannten Nachbeschleunigers 18 aus dem Feldhäcksler 2 heraus auf ein nicht dargestelltes Ladefahrzeug gefördert wird.

Zur weitgehenden Vermeidung, dass in dem Emtegutstrang 6 eingelagerte Fremdkörper 19 in den Bereich der Häckseltrommel 16 gelangen können, ist dem frontseitigen Einzugswalzenpaar 20 eine an sich bekannte Fremdkörperortungsvorrichtung 21 zugeordnet. Wird der in dem Emtegutstrang 6 eingelagerte Fremdkörper 19 in den Bereich der Fremdkörperortungsvorrichtung 21 gefördert, generiert diese ein Ortungssignal X welches einer Auswert- und Steuereinheit 22 zugeführt wird und in dieser ein sogenanntes Schnellstoppsignal Y generiert, welches den noch näher zu beschreibenden Antrieb 13 der Einzugs- und Vorpresswalzen 10 abschaltet. Nach Beendigung des Schnellstoppvorganges kann der Betreiber 23 der landwirtschaftlichen Arbeitsmaschine 1 über ein Eingabeterminal 24 ein Reversiersignal Z in der Auswert- und Steuereinheit 22 auslösen, welches einen Reversierlauf des Antriebs 13 und der mit ihm gekoppelten Einzugs- und Vorpresswalzen 10 auslöst. Dabei wird der detektierte Fremdkörper 19 wieder aus dem Bereich der Einzugs- und Vorpresswalzen 10 herausgefördert und kann schließlich von dem Betreiber 23 aus dem Erntegutstrang 6 entfemt werden. Es liegt im Rahmen der Erfindung, dass der beschriebene Reversiervorgang auch automatisch nach dem Stillstand der Einzugs- und Vorpresswalzen 10 ausgelöst werden kann.

Je nach Trägheit des Antriebs 13 und der mit ihm gekoppelten Organe vergeht eine gewisse Zeit bis die Einzugs- und Vorpresswalzen 10 nach Aktivierung der Schnellstoppfunktion stillstehen. Diese Zeitspanne darf nicht so groß sein, dass der detektierte Fremdkörper 19 dennoch in den Bereich der umlaufenden Häckseltrommel 16 gelangt. Hier setzt nun die nachfolgen im Detail beschriebene Erfindung an.

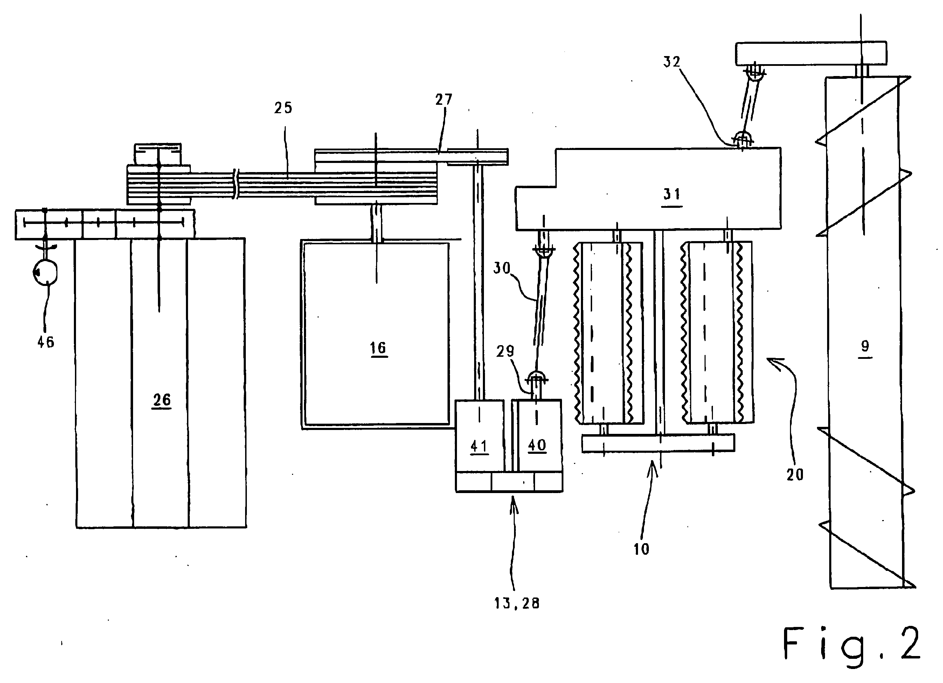

Gemäß Figur 2 überträgt ein erstes Antriebsriemensystem 25 die Antriebsenergie des Motors 26 unter anderem auf die Häckseltrommel 16, von der aus ein weiteres Riemensystem 27 eine hydraulische Motor-Pumpe-Einheit 28 antreibt, die schließlich den stufenlosen hydraulischen Antrieb 13 der Einzugs- und Vorpresswalzen 10 bildet. Hierfür ist der Abtriebswelle 29 der Motor-Pumpe-Einheit 28 über eine Gelenkwelle 30 ein mechanisches Verteilgetriebe 31 zugeordnet, welches zunächst jede der Einzugs- und Vorpresswalzen 10 in an sich bekannter Weise antreibt. Zudem verfügt das Verteilgetriebe 31 über einen weiteren Getriebeausgang 32, der unmittelbar das den Einzugs- und Vorpresswalzen 12 vorgeordnete Querförderorgan 9 des Vorsatzgerätes 3 antreibt. Dies hat insbesondere den Vorteil, dass nunmehr auch das Querförderorgan 9 des Vorsatzgerätes 3 in die noch näher zu beschreibende Schnellstoppfunktion sowie den Reversiervorgang der Einzugs- und Vorpresswalzen 10 eingebunden werden kann. In an sich bekannter Weise werden die übrigen aktiv angetriebenen Organe 7, 8 des jeweiligen Vorsatzgerätes 3 über einen weiteren nicht dargestellten mechanischen Antrieb angetrieben.

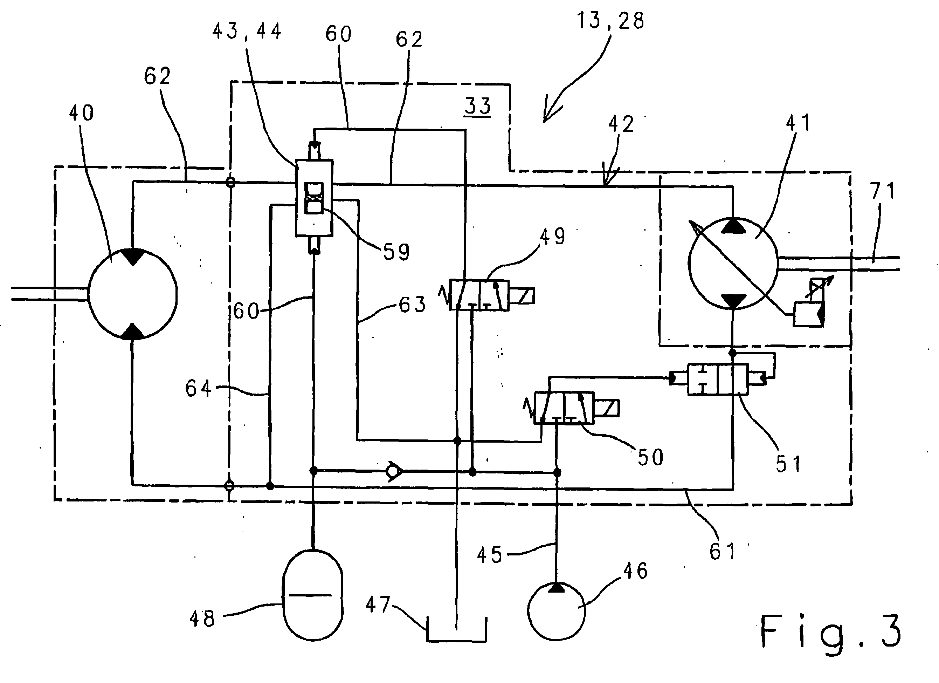

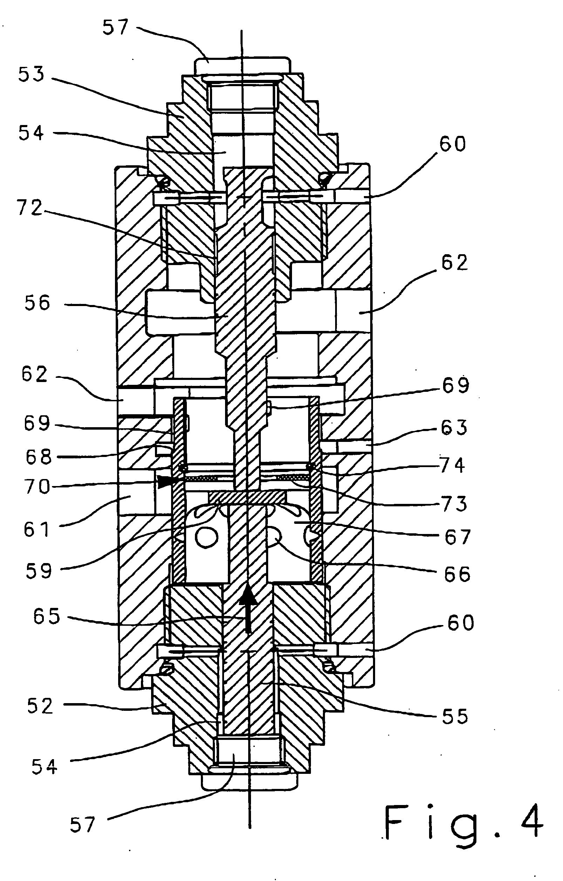

Figur 3 zeigt die Motor-Pumpe-Einheit 28 in einer schematischen Detaildarstellung. Der Hydromotor 40 und die Hydropumpe 41 sind über ein Leitungssystem 42, in welches die erfindungsgemäße, als Stetigventil 43 ausgebildete Schaltventilanordnung 44 integriert ist miteinander verbunden. Die Motor-Pumpe-Einheit 28 ist zudem in einen Hydraulikkreislauf 45 eingebunden, der in an sich bekannter Weise eine als sogenannte Druckquelle ausgeführte Hydraulikpumpe 46, einen Tank 47 zur Speicherung des Hydraulikmediums und einen Druckspeicher 48 umfasst. In an sich bekannter Weise arbeitet der Hydraulikkreislauf 45 wegen der vorhandenen externen Druckquelle 46 als sogenannter Konstantdruckkreislauf. Die weiteren in den Hydraulikkreislauf 45 integrierten elektrohydraulischen Schaltventile 49-51 und die Arbeitsweise des Hydraulikkreislaufs 45 werden im Zusammenhang mit der in Figur 4 abgebildeten, vereinfachten Schnittdarstellung der erfindungsgemäßen Schaltventilanordnung 44 näher beschrieben. Damit der erfindungsgemäße Hydraulikkreislauf 45 ein abruptes Anhalten der als Einzugs- und Vorpresswalzen 10 ausgeführten Einzugsorgane ermöglichen kann, sind zumindest der Hydromotor 40, die Hydropumpe 41 und die erforderlichen Schaltventile 43, 49-51 in einem den Antrieb 13 bildenden Antriebsblock 33 zusammengefasst, wobei die einzelnen Elemente 40, 41, 43, 49-51 des Hydraulikkreislaufs 45 unmittelbar aneinandergeflanscht und/oder durch Rohrleitungssysteme miteinander verbunden sind. Zudem werden die Schaltventile 43, 49-51 des Hydraulikkreislaufs 45 elektrohydraulisch geschaltet. Eine derartige Ausführung hat insbesondere den Vorteil, dass zumindest in dem das Abbremsen des Antriebs 13 realisierenden Bereich des Hydraulikkreislaufs 45 weder Schlauchleitungen noch federkraftbasierte Ventilsteuerungen vorhanden sind, deren elastische Eigenschaften, wie etwa das druckabhängige Dehnen von Schlauchleitungen und die Trägheit von federkraftbasierten Systemen, einem abrupten Abbremsen des Antriebes 13 der Einzugs- und Vorpresswalzen 10 entgegenstehen würden.

Das erfindungsgemäße Stetigventil 43 verfügt gemäß Figur 4 über endseitige Gehäuseabschnitte 52, 53 die von Bohrungen 54 durchsetzt werden in welchen Steuerzylinder 55, 56 verschiebbar angeordnet sind, wobei die Bewegung der Steuerzylinder 55, 56 durch endseitige Anschläge 57 begrenzt wird. An ihren einander zugewandten Stimseiten nehmen die Steuerzylinder 55, 56 zwischen sich eine Kolbenfläche 58 auf über die eine Verschiebung der Steuerzylinder 55, 56 zugleich zu einer Verschiebung des Ventilkolbens 59 innerhalb des Stetigventils 43 führt. In einem ersten Betriebszustand, dem "Normalbetrieb", werden die Steuerzylinder 55, 56 in ihren rückwärtigen Bereichen über Steuerdruckleitungen 60 unabhängig voneinander mit einem definierten Steuerdruck beaufschlagt, der den Ventilkolben 58 in einer Gleichgewichtslage nach Fig. 4 hält. In dieser Gleichgewichtslage ist der Umlauf des Hydraulikmediums zwischen Hydromotor 40 und Hydropumpe 41 geschlossen. Das Hydraulikmedium wird über eine Druckleitung 61 zum Hydromotor 40 und über eine Rücklaufleitung 62 zurückgefördert und von der Hydropumpe 41 erneut zum Hydromotor 40 gefördert. Zugleich wird eine Teilmenge des Hydraulikmediums über einen Spülölkanal 63 aus dem Kreislauf zwecks Kühlung und/oder Filterung entnommen. Es liegt im Rahmen der Erfindung, dass das Gleichgewicht zwischen den Steuerzylindern 55, 56 einerseits durch aufeinander abgestimmte Zylinderflächenverhältnisse oder durch Druckbeaufschlagung der Steuerzylinder 55, 56 mit gesteuerten Öldrücken realisiert werden kann.

Der Betriebszustand "Normalbetrieb" wird solange beibehalten, bis an der Fremdkörperortungsvorrichtung 21 ein Fremdkörper 19 detektiert und in der Auswert-und Steuereinheit 22 das Schnellstoppsignal Y generiert und in den Betriebszustand "Schnellstopp" umgeschaltet wird. Das Schnellstoppsignal Y führt dabei zum Umschalten des dem Stetigventil 43 zugeordneten Schnellstoppschaltventils 49 in die in Figur 3 dargestellte Position. In dieser Position ist der obere Steuerzylinder 56 drucklos geschaltet, indem das Hydraulikmedium über die Druckleitung 60 und das dieser zugeordnete Schnellstoppschaltventil 49 in den Tank 47 abgeführt wird. Im Betriebszustand "Schnellstopp" fungiert der obere Steuerzylinder 56 als Öffnungszylinder. Der weiter druckbeaufschlagte untere Steuerzylinder 55 arbeitet im Betriebszustand "Schnellstopp" als Schließzylinder und bewegt den Ventilkolben 59 gemäß Pfeilrichtung 65 durch das erfindungsgemäße Stetigventil 43. In seinem der Kolbenfläche 58 des Ventilkolbens 59 zugeordneten vorderen Bereich nimmt der untere Steuerzylinder 55 einen von Bypassbohrungen 66 durchsetzte Bypasskolben 66 auf. Die Bewegung des unteren Steuerzylinders 55 verfährt den Bypasskolben 66 in einem ersten Schritt in den Bereich der zum Hydromotor 40 führenden Druckleitung 61. Dabei fließt das Hydraulikmedium unter Umgehung des Hydromotors 40 über eine Bypassleitung 64 zurück zur Hydropumpe 41, sodass die Versorgung des Hydromotors 40 mit unter Druck stehendem Hydraulikmedium zusammenbricht, mithin der Hydromotor 40 abgeschaltet wird. Die weitere Bewegung des Ventilkolbens 59 gemäß Pfeilrichtung 65 schließt in einem weiteren Schritt mittels einer an dem Vontilkolben 59 angeformten Blende 68 den Spülölkanal 63, sodass über diesen kein Hydraulikmedium mehr abgeführt werden kann. Nachdem der Spülölkanal 63 vollständig geschlossen ist führt die weitere Bewegung des Ventilkolbens 59 gemäß Pfeilrichtung 65 zum schlagartigen Abbremsen des Hydromotors 40 und damit zum Stillstand der Einzugs- und Vorpresswalzen 10 indem der Ventilkolben 59 die Rücklaufleitung 62 vom Hydromotor 40 zur Hydropumpe 41 schließt. Da die Hydropumpe 41 weiter Hydraulikmedium zum Hydromotor 40 fördert, dieses aber nicht mehr abfließen kann, baut sich in der Druckleitung 61 zum Hydromotor 40 abrupt ein Staudruck auf, der den Hydromotor 40 und die mit ihm gekoppelten Einzugs- und Vorpresswalzen 10 schlagartig anhält. Damit der sich aufbauende Staudruck nicht zu einer Überlastung der von ihm beaufschlagten Organe führt, ist das dem als Öffnungszylinder fungierenden Steuerzylinder 56 zugeordnete Ende des Ventilkolbens 59 von Drvsselschlitzen 69 durchsetzt, über die überschüssiges Hydraulikmedium aus dem Motorrücklauf 62 abfließen kann. Optimalerweise sind die Drosselschlitze 69, die Steuerzylinder 55, 56 und der Ventilkolben 59 so dimensioniert, dass sich ein Staudruck einstellt, der im Bereich des Betriebsdruckes des Hydraulikkreislaufs 25 liegt und vorzugsweise 350 bar beträgt. Die Bewegung des Schließzylinders 55 gemäß Pfeilrichtung 65 führt zudem zu einer kontinuierlichen Verkleinerung des Durchgangsquerschnitts der Drosselschlitze 69. Die Differenzfläche des Ventilkolbens 59 ist so dimensioniert, dass der Ventilkolben 59 mit dem druckbeaufschlagten Schließzylinder 55 dann im Gleichgewicht steht, wenn der Staudruck einen definierten Wert, im dargestellten Ausführungsbeispiel 350 bar erreicht hat. Damit wird auf einfache Weise das sichere Halten der Bremsfunktion gewährleistet.

In einer vorteilhaften Weiterbildung der Erfindung ist dem Ventilkolben 59 des erfindungsgemäßen Stetigventils 43 ein Rückschlagventil 70 in Form einer von dem Hydraulikmedium bewegbaren Dichtscheibe 73 zugeordnet. Die Dichtscheibe 73 ist zwischen der von den Stauerzylindern 55, 56 kontaktierten Kolbenfläche des Ventilkolbens 59 und einem in den Ventilkolben 59 eingepassten Stellring 74 freibeweglich angeordnet und wird je nach Fließrichtung des Hydraulikmediums gegen den Stellring 74 oder den Ventilkolben 59 gepresst. Im Betriebszustand "Normalbetrieb" ist das Rückschlagventil 70 geschlossen, da das von dem Hydromotor 40 zur Hydropumpe 41 über die Rücklaufleitung 62 zurückströmende Hydraulikmedium die Dichtscheibe 73 in Richtung der Kolbenfläche des Ventilkolbens 59 und damit in Schließrichtung druckbeaufschlagt. Im Betriebsmodus "Schnellstopp" fördert die als Druckquelle arbeitende Hydropumpe 46 einen Druckölstrom in Öffnungsrichtung des Rückschlagventils 70, in welcher die Dichtscheibe 73 an dem Stellring 74 anliegt, sodass während des Betriebsmodus "Schnellstopp" der durch die Hydropumpe 46 erzeugte Steuerölstrom in den erfindungsgemäßen Hydraulikkreislauf 45 gelangt, damit in diesem auch während des Bremsvorganges der sogenannte Speisedruck aufrechterhalten bleibt.

In einer weiteren vorteilhaften Ausgestaltung der Erfindung kann der Hydropumpe 41 zudem ein als elektrohydraulisches Schaltventil ausgeführtes Bremsventil 51 zugeordnet sein, welches die über einen externen Antrieb 71 mit der Hydropumpe 41 gekoppelte Häckseltrommel 16 nach Abschaltung ihres Antriebes abbremst. Dies hat vor allem den Effekt, dass lange Nachlaufzeiten der abgeschalteten Häckseltrommel 16 vermieden werden. Das Auslösen der Bremsfunktion kann beispielsweise dadurch erreicht werden, dass das Druckquellenschaltventil 50 das Bremsventil 51 mittels eines Steuerdrucks in die Sperrstellung schaltet, sodass die Drehbewegung der Hydropumpe 41 blockiert und damit die Häckseltrommel 16 schlagartig bis zum Stillstand abgebremst wird.

In einer weiteren vorteilhaften Ausgestaltung ist dem als Öffnungszylinder ausgeführten Steuerzylinder 56 obenseitig ein Drosselquerschnitt 72 zugeordnet, über den das von dem Steuerzylinder 56 verdrängte Hydraulikmedium abgeleitet wird. Dies führt dazu, dass der Steuerzylinder 56 vor dem Erreichen des ihm zugeordneten Anschlags 57 abgebremst wird und stoßarm zur Anlage an dem Anschlag 57 gelangt.

### Bezugszeichenliste:

- 1: landwirtschaftliche Arbeitsmaschine
- 2: Feldhäcksler
- 3: Vorsatzgerät
- 4: Pick-up
- 5: Boden
- 6: Erntegutstrang
- 7: Aufsammeleinrichtung
- 8: Niederhalteranordnung
- 9: Querförderorgan
- 10: Einzugs- und Vorpresswalzen
- 11: Einzugsgehäuse
- 12: Pfeilrichtung
- 13: Antrieb
- 14: Gegenschneide
- 15: Häckselmesser
- 16: Häckseltrommel
- 17: Auswurfschacht
- 18: Nachbeschleuniger
- 19: Fremdkörper
- 20: Einzugswalzenpaar
- 21: Fremdkörperortungsvorrichtung
- 22: Auswert- und Steuereinheit
- 23: Betreiber
- 24: Eingabeterminal
- 25: erstes Antriebsriemensystem
- 26: Motor
- 27: weiteres Antriebssystem
- 28: Motor-Pumpe-Einheit
- 29: Abtriebswelle
- 30: Gelenkwelle
- 31: Verteilgetriebe
- 32: Getriebeausgang
- 33: Antriebsblock
- 40: Hydromotor
- 41: Hydropumpe
- 42: Leitungssystem
- 43: Stetigventil
- 44: Schaltventilanordnung
- 45: Hydraulikkreislauf
- 46: Hydraulikpumpe
- 47: Tank
- 48: Druckspeicher
- 49: Schnellstoppschaltventil
- 50: Druckquellenschaltventil
- 51: Bremsventil
- 52, 53: Gehäuseabschnitt
- 54: Bohrung
- 55,56: Steuerzylinder
- 57: Anschlag
- 58: Kolbenfläche
- 59: Ventilkolben
- 60: Druckleitung
- 61: Druckleitung
- 62: Rücklaufleitung
- 63: Spül6lkanal
- 64: Bypassleitung
- 65: Pfeilrichtung
- 66: Bypassbohrung
- 67: Bypasskolben
- 68: Blende
- 69: Drosselschlitze
- 70: Rückschlagventil
- 71: extemer Antrieb
- 72: Drosselquerschnitt
- 73: Dichtscheibe
- 74: Stellring

- X: Ortungssignal
- Y: Schnellstoppsignal
- Z: Reversiersignal

## Patentansprüche

1. Landwirtschaftliche Arbeitsmaschine mit mittels eines Hydraulikkreislaufes hydraulisch angetriebenen Einzugsorganen, wobei die Einzugsorgane über wenigstens einen Hydromotor angetrieben werden und dem Hydraulikkreislauf wenigstens eine Schaltventilanordnung zum Unterbrechen oder Freigeben eines Hydraulikölflusses zu dem wenigstens einen Hydromotor zugeordnet ist, welche in Abhängigkeit vom Signal einer Fremdkörper-Ortungsvorrichtung den Hydraulikölfluss zu dem Hydromotor unterbricht oder freigibt und wobei die Schaltventilanordnung zumindest eine Bremsfunktion für den wenigstens einen Hydromotor umfasst und der die Bremsfunktion realisierende Abschnitt des Hydraulikkreislaufs durch elektrohydraulische Schaltung der Schaltventile im wesentlichen frei von Elastizitäten ist,
**dadurch gekennzeichnet, dass**
weder Schlauchleitungen noch federkraftbasierte Ventilsteuerungen vorhanden sind und wobei die Schaltventilanordnung (44) als Stetigventil (43) ausgebildet ist, dessen Ventilkolben (59) durch Ansteuerung von zumindest zwei Steuerzylindern (55, 56) in seiner Bewegung steuerbar ist. ist.

2. Landwirtschaftliche Arbeitsmaschine mit mittels eines Hydraulikkreislaufes hydraulisch angetriebenen Einzugsorganen nach Anspruch 1,
**dadurch gekennzeichnet,**
**dass** die Schaltventilanordnung (44) in einem Betriebszustand "Normalbetrieb" und wenigstens einem Betriebszustand "Schnellstopp" betreibbar ist.

3. Landwirtschaftliche Arbeitsmaschine mit mittels eines Hydraulikkreislaufes hydraulisch angetriebenen Einzugsorganen nach Anspruch 2,
**dadurch gekennzeichnet,**
**dass** die Schaltventilanordnung (44) in dem Betriebszustand "Normalbetrieb" eine Druckbeaufschlagung des Hydromotors (40) und das Spülen des Hydraulikmediums realisiert.

4. Landwirtschaftliche Arbeitsmaschine mit mittels eines Hydraulikkreislaufes hydraulisch angetriebenen Einzugsorganen nach Anspruch 2,
**dadurch gekennzeichnet,**
**dass** die Schaltventilanordnung (44) in dem Betriebszustand "Schnellstopp" einen Arbeitszyklus durchläuft, in dem in einem ersten Schritt die Förderung des Hydraulikmediums zum Hydromotor (40) zumindest teilweise unterbrochen wird, in einem weiteren Schritt das Spülen des Hydraulikmediums eingestellt wird und in wenigstens einem dritten Schritt das Abbremsen des Hydromotors (40) erfolgt.

5. Landwirtschaftliche Arbeitsmaschine mit mittels eines Hydraulikkreislaufes hydraulisch angetriebenen Einzugsorganen nach Anspruch 4,
**dadurch gekennzeichnet,**
**dass** die Steuerzylinder (55, 56) unabhängig voneinander ansteuerbar sind.

6. Landwirtschaftliche Arbeitsmaschine mit mittels eines Hydraulikkreislaufes hydraulisch angetriebenen Einzugsorganen nach einem der vorhergehenden Ansprüche,
**dadurch gekennzeichnet,**
**dass** die Zylinderflächen der Steuerzylinder (55, 56) jeweils gegenüberliegenden Kolbenflächen (58) des Ventilkolbens (59) zugeordnet sind.

7. Landwirtschaftliche Arbeitsmaschine mit mittels eines Hydraulikkreislaufes hydraulisch angetriebenen Einzugsorganen nach einem der vorhergehenden Ansprüche,
**dadurch gekennzeichnet,**
**dass** der eine Steuerzylinder (55) als Schließzylinder (55) ausgeführt ist und permanent durch einen Steuerdruck druckbeaufschlagt wird.

8. Landwirtschaftliche Arbeitsmaschine mit mittels eines Hydraulikkreislaufes hydraulisch angetriebenen Einzugsorganen nach einem der vorhergehenden Ansprüche,
**dadurch gekennzeichnet,**
**dass** der weitere Steuerzylinder (56) als Öffnungszylinder (56) ausgeführt ist und der Steuerdruck mit dem der weitere Steuerzylinder (56) druckbeaufschlagbar ist zu- oder abgeschaltet werden kann.

9. Landwirtschaftliche Arbeitsmaschine mit mittels eines Hydraulikkreislaufes hydraulisch angetriebenen Einzugsorganen nach Anspruch 8,
**dadurch gekennzeichnet,**
**dass** die Abschaltung des Steuerdrucks des weiteren Steuerzylinders (56) das Umschalten der Schaltventilanordnung (44) von dem Betriebszustand "Normalbetrieb" in den Betriebszustand "Schnellstopp" bewirkt.

10. Landwirtschaftliche Arbeitsmaschine mit mittels eines Hydraulikkreislaufes hydraulisch angetriebenen Einzugsorganen nach einem der vorhergehenden Ansprüche,
**dadurch gekennzeichnet,**
**dass** dem Hydraulikkreislauf (25) ein Bremsventil (51) in der Weise zugeordnet ist, dass die Drehbewegung der Hydropumpe (41) abgebremst werden kann.

11. Landwirtschaftliche Arbeitsmaschine mit mittels eines Hydraulikkreislaufes hydraulisch angetriebenen Einzugsorganen nach einem der vorhergehenden Ansprüche,
**dadurch gekennzeichnet,**
**dass** der Fremdkörperortungsvorrichtung (21) eine Auswert- und Steuereinheit (22) zugeordnet ist, die in Abhängigkeit von einem Ortungssignal X der Fremdkörperortungsvorrichtung (21) ein Schnellstoppsignal Y zur Umschaltung der Schaltventilanordnung (44) in den Betriebszustand "Schnellstopp" generiert.

12. Landwirtschaftliche Arbeitsmaschine mit mittels eines Hydraulikkreislaufes hydraulisch angetriebenen Einzugsorganen nach einem der vorhergehenden Ansprüche,
**dadurch gekennzeichnet,**
**dass** die wenigstens zwei Steuerzylinder (55, 56) der Schaltventilanordnung (44) im Betriebszustand "Normalbetrieb" und zumindest teilweise während der Abarbeitung des dritten Schritts des Arbeitszyklus der Schaltventilanordnung (44) in dem Betriebszustand "Schnellstopp" im Gleichgewicht verharren.

13. Landwirtschaftliche Arbeitsmaschine mit mittels eines Hydraulikkreislaufes hydraulisch angetriebenen Einzugsorganen nach Anspruch 12,
**dadurch gekennzeichnet,**
**dass** der Gleichgewichtszustand im Betriebszustand "Normalbetrieb" durch aufeinander abgestimmte Zylinderflächenverhältnisse der Steuerzylinder (55, 56) und/oder durch Druckbeaufschlagung der Steuerzylinder (55, 56) mit gesteuerten Drücken des Hydraulikmediums realisiert wird.

14. Landwirtschaftliche Arbeitsmaschine mit mittels eines Hydraulikkreislaufes hydraulisch angetriebenen Einzugsorganen nach Anspruch 12,
**dadurch gekennzeichnet,**
**dass** das Gleichgewicht der Steuerzylinder (55, 56) im Betriebszustand "Schnellstopp" im wesentlichen am Ende des dritten Schrittes des Arbeitszyklus **dadurch** erreicht wird, dass die resultierende Druckkraft des druckbeaufschlagten Steuerzylinders (55) im Gleichgewicht mit der von der Differenzfläche des Ventilkolbens (59) und einem auf den Ventilkolben (59) wirkenden Staudruck abhängigen Reaktionskraft steht.

15. Landwirtschaftliche Arbeitsmaschine mit mittels eines Hydraulikkreislaufes hydraulisch angetriebenen Einzugsorganen nach einem der vorhergehenden Ansprüche,
**dadurch gekennzeichnet,**
**dass** dem Schließzylinder (55) ein Bypasskolben (67) zugeordnet ist dessen zumindest eine Bypassbohrung (66) während der Bewegung des Ventilkolbens (59) im ersten Schritt des Arbeitszyklusses eine Bypassleitung (64) öffnet über die zumindest ein Teil des zum Hydromotor (40) fließenden Hydraulikmediums abgeleitet wird.

16. Landwirtschaftliche Arbeitsmaschine mit mittels eines Hydraulikkreislaufes hydraulisch angetriebenen Einzugsorganen nach Anspruch 15,
**dadurch gekennzeichnet,**
**dass** dem Bypass ein Rückschlagventil (70) zum Schließen des Bypasses zugeordnet ist

17. Landwirtschaftliche Arbeitsmaschine mit mittels eines Hydraulikkreislaufes hydraulisch angetriebenen Einzugsorganen nach einem der vorhergehenden Ansprüche,
**dadurch gekennzeichnet,**
**dass** der Ventilkolben (59) eine Blende (68) aufweist, die während der Bewegung des Ventilkolbens (59) im zweiten Schritt des Arbeitszyklusses die Verbindung zwischen dem Arbeitsanschluss und einem Spulölkanal (63) unterbricht.

18. Landwirtschaftliche Arbeitsmaschine mit mittels eines Hydraulikkreislaufes hydraulisch angetriebenen Einzugsorganen nach einem der vorhergehenden Ansprüche,
**dadurch gekennzeichnet,**
**dass** der Ventilkolben (59) einenends Drosselschlitze (69) aufweist, die während der Bewegung des Ventilkolbens (59) im dritten Schritt des Arbeitszyklusses die Rücklaufleitung (62) vom Hydromotor (40) zur Hydropumpe (41) schließen und wobei das von der Hydropumpe (41) nachgeförderte Hydraulikmedium einen Staudruck zum Abbremsen des Hydromotors (40) aufbaut.

19. Landwirtschaftliche Arbeitsmaschine mit mittels eines Hydraulikkreislaufes hydraulisch angetriebenen Einzugsorganen nach Anspruch 18,
**dadurch gekennzeichnet,**
**dass** der Staudruck den Betriebsdruck im Bereich des zulässigen Betriebsdruckes liegt.

20. Landwirtschaftliche Arbeitsmaschine mit mittels eines Hydraulikkreislaufes hydraulisch angetriebenen Einzugsorganen nach einem der vorhergehenden Ansprüche,
**dadurch gekennzeichnet,**
**dass** dem Ventilkolben (59) eine Vielzahl von Drosselstellen in der Weise zugeordnet sind, dass sich in Abhängigkeit von dem von dem Ventilkolben (59) zurückgelegten Kolbenweg der freie Durchgangsquerschnitt für das Hydraulikmedium stetig ändert.

21. Landwirtschaftliche Arbeitsmaschine mit mittels eines Hydraulikkreislaufes hydraulisch angetriebenen Einzugsorganen nach einem der vorhergehenden Ansprüche,
**dadurch gekennzeichnet,**
**dass** den zumindest zwei Steuerzylindern (55, 56) Steuerkanten und/oder Drosselstellen in der Weise zugeordnet sind, dass die Bewegung des Ventilkolbens (59) in den Endbereichen abgebremst wird.

22. Landwirtschaftliche Arbeitsmaschine mit mittels eines Hydraulikkreislaufes hydraulisch angetriebenen Einzugsorganen nach einem der vorhergehenden Ansprüche,
**dadurch gekennzeichnet,**
**dass** der Hydromotor (40), die Hydropumpe (41), die Schaltventilanordnung (44) und die zur Ansteuerung des Hydromotors (40), der Hydropumpe (41) und der Schaltventilanordnung (44) zumindest in den Betriebzuständen "Normalbetrieb" und "Schnellstopp" notwendigen Schaltventile (49-51) in einem den Antrieb (13) der Einzugsorgane (10) bildenden Antriebsblock (33) zusammengefasst sind.

23. Landwirtschaftliche Arbeitsmaschine mit mittels eines Hydraulikkreislaufes hydraulisch angetriebenen Einzugsorganen nach einem der vorhergehenden Ansprüche,
**dadurch gekennzeichnet,**
**dass** die Einzugsorgane (10) mit zumindest einem mechanischen Verteilgetriebe (31) gekoppelt sind, dessen Eingangswelle (30) mit dem hydraulischen Antrieb (13) gekoppelt ist und wobei das mechanische Verteilgetriebe (30) zudem über einen weiteren Getriebeausgang (32) verfügt.

24. Landwirtschaftliche Arbeitsmaschine mit mittels eines Hydraulikkreislaufes hydraulisch angetriebenen Einzugsorganen nach Anspruch 23,
**dadurch gekennzeichnet,**
**dass** der weitere Getriebeausgang (32) mit einem Querförderorgan (9) eines den Einzugsorganen (10) vorgeordneten Vorsatzgerät (3) gekoppelt ist.

25. Landwirtschaftliche Arbeitsmaschine mit mittels eines Hydraulikkreislaufes hydraulisch angetriebenen Einzugsorganen nach einem der vorhergehenden Ansprüche,
**dadurch gekennzeichnet,**
**dass** der Antrieb (13) im Reversierbetrieb betrieben werden kann.

## Claims

1. An agricultural working machine comprising intake members hydraulically driven by means of a hydraulic circuit, wherein the intake members are driven by way of at least one hydraulic motor and associated with the hydraulic circuit is at least one switching valve arrangement for interrupting or enabling a flow of hydraulic oil to the at least one hydraulic motor, which in dependence on the signal from a foreign body locating device interrupts or enables the flow of hydraulic oil to the hydraulic motor and wherein the switching valve arrangement includes at least one braking function for the at least one hydraulic motor and the portion of the hydraulic circuit, that implements the braking function, by virtue of electrohydraulic switching of the switching valves, is substantially free of elasticities,
**characterised in that**
there are neither hose lines nor spring force-based valve control means and the switching valve arrangement (44) is in the form of a proportional servo valve (43) whose valve piston (59) is controllable in its movement by actuation of at least two control cylinders (55, 56).

2. An agricultural working machine comprising intake members hydraulically driven by means of a hydraulic circuit according to claim 1 **characterised in that** the switching valve arrangement (44) is operable in a 'normal operation' operating state and at least one 'quick stop' operating state.

3. An agricultural working machine comprising intake members hydraulically driven by means of a hydraulic circuit according to claim 2 **characterised in that** the switching valve arrangement (44) in the 'normal operation' operating state provides for pressurisation of the hydraulic motor (40) and purging of the hydraulic medium.

4. An agricultural working machine comprising intake members hydraulically driven by means of a hydraulic circuit according to claim 2 **characterised in that** the switching valve arrangement (44) in the 'quick stop' operating state implements a working cycle in which delivery of the hydraulic medium to the hydraulic motor (40) is at least partially interrupted in a first step and purging of the hydraulic medium is set in a further step and braking of the hydraulic motor (40) is effected in at least one third step.

5. An agricultural working machine comprising intake members hydraulically driven by means of a hydraulic circuit according to claim 4 **characterised in that** the control cylinders (55, 56) are actuable independently of each other.

6. An agricultural working machine comprising intake members hydraulically driven by means of a hydraulic circuit according to one of the preceding claims **characterised in that** the cylinder surfaces of the control cylinders (55, 56) are associated with respectively opposite piston surfaces (58) of the valve piston (59).

7. An agricultural working machine comprising intake members hydraulically driven by means of a hydraulic circuit according to one of the preceding claims **characterised in that** the one control cylinder (55) is in the form of a closing cylinder (55) and is permanently pressurised by a control pressure.

8. An agricultural working machine comprising intake members hydraulically driven by means of a hydraulic circuit according to one of the preceding claims **characterised in that** the further control cylinder (56) is in the form of an opening cylinder (56) and the control pressure with which the further control cylinder (56) is pressurisable can be switched on or off.

9. An agricultural working machine comprising intake members hydraulically driven by means of a hydraulic circuit according to claim 8 **characterised in that** switching off the control pressure of the further control cylinder (56) causes the switching valve arrangement (44) to switch over from the 'normal operation' operating state to the 'quick stop' operating state.

10. An agricultural working machine comprising intake members hydraulically driven by means of a hydraulic circuit according to one of the preceding claims **characterised in that** a braking valve (51) is associated with the hydraulic circuit (25) in such a way that a rotary movement of the hydraulic pump (41) can be braked.

11. An agricultural working machine comprising intake members hydraulically driven by means of a hydraulic circuit according to one of the preceding claims **characterised in that** associated with the foreign body locating device (21) is an evaluation and control unit (22) which in dependence on a locating signal X of the foreign body locating device (21) generates a quick stop signal Y for switching over the switching valve arrangement (44) into the 'quick stop' operating state.

12. An agricultural working machine comprising intake members hydraulically driven by means of a hydraulic circuit according to one of the preceding claims **characterised in that** the at least two control cylinders (55, 56) of the switching valve arrangement (44) remain in equilibrium in the 'normal operation' operating state and at least partially during implementation of the third step in the working cycle of the switching valve arrangement (44) in the 'quick stop' operating state.

13. An agricultural working machine comprising intake members hydraulically driven by means of a hydraulic circuit according to claim 12 **characterised in that** the state of equilibrium in the 'normal operation' operating state is implemented by mutually matched cylinder area relationships of the control cylinders (55, 56) and/or by pressurisation of the control cylinders (55, 56) with controlled hydraulic medium pressures.

14. An agricultural working machine comprising intake members hydraulically driven by means of a hydraulic circuit according to claim 12 **characterised in that** the equilibrium of the control cylinders (55, 56) in the 'quick stop' operating state is reached substantially at the end of the third step in the working cycle **in that** the resulting pressure force of the pressurised control cylinder (55) is in equilibrium with the reaction force which is dependent on the differential area of the valve piston (59) and a dynamic pressure acting on the valve piston (59).

15. An agricultural working machine comprising intake members hydraulically driven by means of a hydraulic circuit according to one of the preceding claims **characterised in that** associated with the closing cylinder (55) is a bypass piston (67) whose at least one bypass bore (66), during the movement of the valve piston (59) in the first step in the working cycle, opens a bypass conduit (64), by way of which at least a part of the hydraulic medium flowing to the hydraulic motor (40) is carried away.

16. An agricultural working machine comprising intake members hydraulically driven by means of a hydraulic circuit according to claim 15 **characterised in that** a check valve (70) is associated with the bypass for closing the bypass.

17. An agricultural working machine comprising intake members hydraulically driven by means of a hydraulic circuit according to one of the preceding claims **characterised in that** the valve piston (59) has a restrictor (68) which interrupts the connection between the working connection and a purge oil passage (63) during the movement of the valve piston (59) in the second step in the working cycle.

18. An agricultural working machine comprising intake members hydraulically driven by means of a hydraulic circuit according to one of the preceding claims **characterised in that** the valve piston (59) has at one end throttle slits (69) which during the movement of the valve piston (59) in the third step in the working cycle close the return line (62) from the hydraulic motor (40) to the hydraulic pump (41) and the hydraulic medium which is subsequently delivered by the hydraulic pump (41) builds up a dynamic pressure for braking the hydraulic motor (40).

19. An agricultural working machine comprising intake members hydraulically driven by means of a hydraulic circuit according to claim 18 **characterised in that** the dynamic pressure puts the operating pressure in the region of the admissible operating pressure.

20. An agricultural working machine comprising intake members hydraulically driven by means of a hydraulic circuit according to one of the preceding claims **characterised in that** a plurality of throttle locations are associated with the valve piston (59) in such a way that the free through-flow cross-section for the hydraulic medium changes continuously in dependence on the piston travel covered by the valve piston (59).

21. An agricultural working machine comprising intake members hydraulically driven by means of a hydraulic circuit according to one of the preceding claims **characterised in that** control edges and/or throttle locations are associated with the at least two control cylinders (55, 56) in such a way that the movement of the valve piston (59) is braked in the end regions.

22. An agricultural working machine comprising intake members hydraulically driven by means of a hydraulic circuit according to one of the preceding claims **characterised in that** the hydraulic motor (40), the hydraulic pump (41), the switching valve arrangement (44) and the switching valves (49-51) necessary for actuation of the hydraulic motor (40), the hydraulic pump (41) and the switching valve arrangement (44) at least in the 'normal operation' and 'quick stop' operating states are combined in a drive block (33) forming the drive (13) of the intake members (10).

23. An agricultural working machine comprising intake members hydraulically driven by means of a hydraulic circuit according to one of the preceding claims **characterised in that** the intake members (10) are coupled to at least one mechanical transfer transmission (31) whose input shaft (30) is coupled to the hydraulic drive (13) and the mechanical transfer transmission (30) also has a further transmission output (32).

24. An agricultural working machine comprising intake members hydraulically driven by means of a hydraulic circuit according to claim 23 **characterised in that** the further transmission output (32) is coupled to a transverse conveyor member (9) of a front-mounted implement (3) arranged in front of the intake members (10).

25. An agricultural working machine comprising intake members hydraulically driven by means of a hydraulic circuit according to one of the preceding claims **characterised in that** the drive (13) can be operated in a reversing operating mode.

## Revendications

1. Machine agricole de travail comportant des organes d'introduction entraînés hydrauliquement au moyen d'un circuit hydraulique, les organes d'introduction étant entraînés par au moins un moteur hydraulique, et au moins un système de soupapes de commutation pour interrompre ou libérer un flux d'huile hydraulique vers ledit au moins un moteur hydraulique étant associé au circuit hydraulique, lequel système interrompt ou libère le flux d'huile hydraulique vers le moteur hydraulique en fonction du signal d'un dispositif de détection de corps étrangers, et le système de soupapes de commutation comprenant au moins une fonction de freinage pour ledit au moins un moteur hydraulique, et la portion du circuit hydraulique réalisant la fonction de freinage étant essentiellement exempte d'élasticités, **caractérisée en ce que** ni conduites flexibles ni commandes de soupapes basées sur une force de ressort ne sont présentes et que le système de soupapes de commutation (44) est réalisé sous la forme d'un distributeur proportionnel (43) dont le mouvement du piston de soupape (59) peut être commandé par activation d'au moins deux cylindres de commande (55, 56).

2. Machine agricole de travail comportant des organes d'introduction entraînés hydrauliquement au moyen d'un circuit hydraulique selon la revendication 1, **caractérisée en ce que** le système de soupapes de commutation (44) peut fonctionner dans un état de fonctionnement « fonctionnement normal » et au moins dans un état de fonctionnement « arrêt rapide ».

3. Machine agricole de travail comportant des organes d'introduction entraînés hydrauliquement au moyen d'un circuit hydraulique selon la revendication 2, **caractérisée en ce que**, dans l'état de fonctionnement « fonctionnement normal », le système de soupapes de commutation (44) réalise l'application d'une pression au moteur (40) et le rinçage du fluide hydraulique.

4. Machine agricole de travail comportant des organes d'introduction entraînés hydrauliquement au moyen d'un circuit hydraulique selon la revendication 2, **caractérisée en ce que,** dans l'état de fonctionnement « arrêt rapide », le système de soupapes de commutation (44) parcourt un cycle de travail dans lequel, dans une première étape, le transport de fluide hydraulique vers le moteur hydraulique (40) est au moins partiellement interrompu, dans une étape suivante le rinçage du fluide hydraulique est suspendu et, dans au moins une troisième étape, le moteur hydraulique (40) est freiné.

5. Machine agricole de travail comportant des organes d'introduction entraînés hydrauliquement au moyen d'un circuit hydraulique selon la revendication 4, **caractérisée en ce que** les cylindres de commande (55, 56) peuvent être commandés indépendamment l'un de l'autre.

6. Machine agricole de travail comportant des organes d'introduction entraînés hydrauliquement au moyen d'un circuit hydraulique selon l'une des revendications précédentes, **caractérisée en ce que** les surfaces de cylindre des cylindres de commande (55, 56) sont respectivement associées à des surfaces de piston (58) opposées du piston de soupape (59).

7. Machine agricole de travail comportant des organes d'introduction entraînés hydrauliquement au moyen d'un circuit hydraulique selon l'une des revendications précédentes, **caractérisée en ce qu'**un des cylindres de commande (55) est réalisé sous la forme d'un cylindre de fermeture (55) auquel une pression de commande est appliquée en permanence.

8. Machine agricole de travail comportant des organes d'introduction entraînés hydrauliquement au moyen d'un circuit hydraulique selon l'une des revendications précédentes, **caractérisée en ce que** l'autre cylindre de commande (56) est réalisé sous la forme d'un cylindre d'ouverture (56), et la pression de commande applicable à l'autre cylindre de commande (56) peut être activée ou désactivée.

9. Machine agricole de travail comportant des organes d'introduction entraînés hydrauliquement au moyen d'un circuit hydraulique selon la revendication 8, **caractérisée en ce que** la coupure de la pression de commande de l'autre cylindre de commande (56) provoque la commutation du système de soupapes de commutation (44) de l'état de fonctionnement « fonctionnement normal » à l'état de fonctionnement « arrêt rapide ».

10. Machine agricole de travail comportant des organes d'introduction entraînés hydrauliquement au moyen d'un circuit hydraulique selon l'une des revendications précédentes, **caractérisée en ce qu'**une soupape de freinage (51) est associée au circuit hydraulique (25), de manière à pouvoir freiner le mouvement de rotation de la pompe hydraulique (41).

11. Machine agricole de travail comportant des organes d'introduction entraînés hydrauliquement au moyen d'un circuit hydraulique selon l'une des revendications précédentes, **caractérisée en ce qu'**une unité d'analyse et de commande (22) est associée au dispositif de détection de corps étrangers (21), laquelle génère, en fonction d'un signal de repérage X du dispositif de détection de corps étrangers (21), un signal d'arrêt rapide Y pour commuter le système de soupapes de commutation (44) à l'état de fonctionnement « arrêt rapide ».

12. Machine agricole de travail comportant des organes d'introduction entraînés hydrauliquement au moyen d'un circuit hydraulique selon l'une des revendications précédentes, **caractérisée en ce que** lesdits au moins deux cylindres de commande (55, 56) du système de soupapes de commutation (44) restent en équilibre dans l'état de fonctionnement « fonctionnement normal » et au moins partiellement pendant l'exécution de la troisième étape du cycle de travail du système de soupapes de commutation (44) dans l'état de fonctionnement « arrêt rapide ».

13. Machine agricole de travail comportant des organes d'introduction entraînés hydrauliquement au moyen d'un circuit hydraulique selon la revendication 12, **caractérisée en ce que** l'état d'équilibre dans l'état de fonctionnement « fonctionnement normal » est réalisé en harmonisant les rapports de surface de cylindre des cylindres de commande (55, 56) et/ou en appliquant des pressions commandées du fluide hydraulique aux cylindres de commande (55, 56).

14. Machine agricole de travail comportant des organes d'introduction entraînés hydrauliquement au moyen d'un circuit hydraulique selon la revendication 12, **caractérisée en ce que** l'équilibre des cylindres de commande (55, 56) dans l'état de fonctionnement « arrêt rapide » est obtenu essentiellement à la fin de la troisième étape du cycle de travail par le fait que la force de pression résultante du cylindre de commande (55) pressurisé est en équilibre avec la force de réaction dépendante de la surface différentielle du piston de soupape (59) et d'une contre-pression qui agit sur le piston de soupape (59).

15. Machine agricole de travail comportant des organes d'introduction entraînés hydrauliquement au moyen d'un circuit hydraulique selon l'une des revendications précédentes, **caractérisée en ce qu'**au cylindre de fermeture (55) est associé un piston de dérivation (67) dont au moins un orifice de dérivation (66) ouvre, pendant le mouvement du piston de soupape (59) dans la première étape du cycle de travail, une conduite de dérivation (64) par laquelle au moins une partie du fluide hydraulique allant au moteur hydraulique (40) est dérivée.

16. Machine agricole de travail comportant des organes d'introduction entraînés hydrauliquement au moyen d'un circuit hydraulique selon la revendication 15, **caractérisée en ce qu'**un clapet anti-retour (70) servant à fermer la dérivation est associé à la dérivation.

17. Machine agricole de travail comportant des organes d'introduction entraînés hydrauliquement au moyen d'un circuit hydraulique selon l'une des revendications précédentes, **caractérisée en ce que** le piston de soupape (59) comporte un obturateur (68) qui, pendant le mouvement du piston de soupape (59) dans la deuxième étape du cycle de travail, interrompt la liaison entre le raccord de travail et un canal d'huile de rinçage (63).

18. Machine agricole de travail comportant des organes d'introduction entraînés hydrauliquement au moyen d'un circuit hydraulique selon l'une des revendications précédentes, **caractérisée en ce que** le piston de soupape (59) présente à une extrémité des fentes d'étranglement (69) qui, pendant le mouvement du piston de soupape (59) dans la troisième étape du cycle de travail, ferment la conduite de retour (62) du moteur hydraulique (40) vers la pompe hydraulique (41), le fluide hydraulique débité ensuite par la pompe hydraulique (41) créant une contre-pression pour freiner le moteur hydraulique (40).

19. Machine agricole de travail comportant des organes d'introduction entraînés hydrauliquement au moyen d'un circuit hydraulique selon la revendication 18, **caractérisée en ce que** la contre-pression se situe dans la plage de pression de fonctionnement admissible.

20. Machine agricole de travail comportant des organes d'introduction entraînés hydrauliquement au moyen d'un circuit hydraulique selon l'une des revendications précédentes, **caractérisée en ce qu'**une pluralité de points d'étranglement est associée au piston de soupape (59), de manière que la section de passage libre pour le fluide hydraulique varie continuellement en fonction du chemin parcouru par le piston de soupape (59).

21. Machine agricole de travail comportant des organes d'introduction entraînés hydrauliquement au moyen d'un circuit hydraulique selon l'une des revendications précédentes, **caractérisée en ce que** des arêtes de commande et/ou des points d'étranglement sont associés auxdits au moins deux cylindres de commande (55, 56), de manière que le mouvement du piston de soupape (59) soit freiné dans les zones terminales.

22. Machine agricole de travail comportant des organes d'introduction entraînés hydrauliquement au moyen d'un circuit hydraulique selon l'une des revendications précédentes, **caractérisée en ce que** le moteur hydraulique (40), la pompe hydraulique (41), le système de soupapes de commutation (44) et les soupapes de commutation (49-51) nécessaires pour commander le moteur hydraulique (40), la pompe hydraulique (41) et le système de soupapes de commutation (44) au moins dans les états de fonctionnement « fonctionnement normal » et « arrêt rapide » sont regroupés dans un bloc d'entraînement (33) formant l'entraînement (13) des organes d'introduction (10).

23. Machine agricole de travail comportant des organes d'introduction entraînés hydrauliquement au moyen d'un circuit hydraulique selon l'une des revendications précédentes, **caractérisée en ce que** les organes d'introduction (10) sont couplés à au moins une boîte de transfert mécanique (31) dont l'arbre d'entrée (30) est couplé à l'entraînement hydraulique (13), la boîte de transfert mécanique (30) disposant en outre d'une sortie de boîte supplémentaire (32).

24. Machine agricole de travail comportant des organes d'introduction entraînés hydrauliquement au moyen d'un circuit hydraulique selon la revendication 23, **caractérisée en ce que** la sortie de boîte supplémentaire (32) est couplée à un organe de transport transversal (9) d'un outil frontal (3) situé avant les organes d'introduction (10).

25. Machine agricole de travail comportant des organes d'introduction entraînés hydrauliquement au moyen d'un circuit hydraulique selon l'une des revendications précédentes, **caractérisée en ce** l'entraînement (13) peut fonctionner en fonctionnement inversé.
